# FASCICULE DE BREVET EUROPEEN

(11) **EP 3 891 375 B1**
(45) Date de publication et mention de la délivrance du brevet: **20.03.2024**
(21) Numéro de dépôt: 19835692.5
(22) Date de dépôt: 28.11.2019
(51) Int. Cl.: F02K 9/08, F02K 9/32, F02K 9/95

(54) **PROPULSEUR SOLIDE POUR LANCEUR**
FESTKÖRPER-BOOSTER FÜR EINE ABSCHUSSVORRICHTUNG
SOLID BOOSTER FOR A LAUNCHER

(30) Priorité: 05.12.2018 FR 1872380
(43) Date de publication de la demande: 13.10.2021
(73) Titulaire: Centre National d'Etudes Spatiales, 75039 Paris Cedex 01 (FR)
(72) Inventeur: BONNAL, Christophe, 91400 ORSAY (FR)
(74) Mandataire: Germain Maureau
(86) Numéro de dépôt international: PCT/FR2019/052831
(87) Numéro de publication internationale: WO 2020/115403

(56) Documents cités:
- FR-A1- 2 631 387
- FR-A1- 2 664 563
- JP-A- H11 351 058

## Description

La présente invention concerne un propulseur solide pour lanceur, adapté pour être séparé dudit lanceur.

Plus particulièrement, l'invention concerne un système d'extinction et de séparation d'un propulseur solide.

Les lanceurs comportent usuellement un corps central comportant plusieurs propulseurs liquides et/ou solides, chaque propulseur étant soit intégré au corps central pour former plusieurs étages, on parle de propulseurs en ligne, soit juxtaposé au corps central, on parle de propulseurs d'appoint.

Un propulseur permet de donner une accélération au lanceur dans le but de le mouvoir. Usuellement, lors de la séparation d'un propulseur en ligne, le propulseur est séparé longitudinalement du reste du lanceur, et lors de la séparation d'un propulseur d'appoint, ledit propulseur est séparé latéralement du corps central du lanceur.

Dans la suite de la description, on entendra par « propulseur », un propulseur en ligne ou un propulseur d'appoint.

En outre, le terme « reste du lanceur » sera utilisé pour désigner à la fois les autres étages formant le corps central d'un lanceur avec propulseur en ligne et le corps central d'un lanceur avec propulseur d'appoint, après séparation du propulseur.

Un propulseur présente une paroi sensiblement cylindrique, une jupe disposée à l'avant du propulseur et destinée à servir d'interface avec le reste du lanceur, tant pour un lanceur en ligne que pour un propulseur d'appoint, et une tuyère disposée à l'extrémité opposée.

L'avant d'un propulseur est défini par rapport au sens de déplacement du lanceur.

Un propulseur solide comporte du propergol dans lequel est formé un canal de combustion obturé par un allumeur, le propergol et l'allumeur étant disposés dans la paroi cylindrique avec l'allumeur proche de la jupe.

L'allumeur est un générateur de gaz qui permet d'augmenter la pression dans le propulseur jusqu'à initier la combustion du propergol. La combustion génère des gaz, ce qui entretien la pression qui permet la suite de la combustion.

La séparation d'un propulseur est effectuée grâce à divers dispositifs, parmi lesquels, à titre d'exemple :
- Des boulons explosifs qui maintiennent ensemble de manière déverrouillable le propulseur au reste du lanceur, et
- Un cordeau de découpe disposé sur l'interface entre le propulseur et le reste du lanceur.

Les propulseurs solides ont de nombreux avantages, tels que la fiabilité d'allumage, le faible risque d'explosion, le stockage possible pendant plusieurs années, le faible coût et la forte poussée générée pour un volume restreint.

En revanche, un inconvénient des propulseurs solides est que la durée de combustion ne peut pas être maitrisée à cause du caractère auto-entretenu de cette combustion, allant jusqu'à épuisement du propergol. Il est par ailleurs fort complexe de commander l'extinction d'un propulseur solide, celui-ci ne s'éteignant qu'après combustion de l'intégralité de son propergol. Ainsi, si plusieurs propulseurs d'appoint sont utilisés pour un même étage, ils ne s'éteignent pas nécessairement en même temps, ce qui entraine une poussée dissymétrique.

Il est donc nécessaire de pouvoir arrêter la combustion à volonté.

Une solution existante consiste à dépressuriser le propulseur grâce à un Dispositif d'Arrêt de Poussée (DAP) correspondant à un canal d'évacuation formé dans le propergol et débouchant sur la paroi ou la jupe du propulseur, ledit canal étant obturé par une vanne pyrotechnique permettant de générer une fuite des gaz internes au propulseur et ainsi de réduire la pression interne afin d'arrêter la combustion.

Un inconvénient de cette solution est que le canal d'évacuation est difficile à réaliser dans le propergol. Ainsi, la fabrication du propulseur est complexe.

Un propulseur selon l'art antérieur est divulgué dans le document JPH11351058A.

Un but de la présente invention est donc de maîtriser la phase d'extinction d'un propulseur, appelée également queue de poussée, grâce à un système simplifié et fiable, ne nécessitant pas la création d'un canal d'évacuation dans le propergol.

A cet effet, l'invention a pour objet un propulseur solide pour un lanceur, le propulseur étant adapté pour être séparé du reste du lanceur, et comportant :
- Une paroi définissant une chambre de combustion comportant une extrémité dite avant et une extrémité opposée dite arrière,
- Du propergol disposé dans la chambre de combustion,
- Un canal de combustion traversant la chambre de combustion depuis l'extrémité avant vers l'extrémité arrière,
- Une tuyère disposée à l'extrémité arrière de la chambre de combustion,
- Un allumeur obturant le canal de combustion au niveau de l'extrémité avant de la chambre de combustion,
- Une jupe recouvrant l'allumeur à l'extrémité avant de la chambre de combustion, ladite jupe permettant la liaison mécanique du propulseur au reste du lanceur,
caractérisé en ce qu'il comporte un système d'éjection de l'allumeur comportant un système de découpe pyrotechnique configuré pour permettre d'ouvrir le canal de combustion.

Les termes « avant » et « arrière » sont utilisés par rapport au sens de déplacement du lanceur.

Par système d'éjection on entend un système adapté pour déloger l'allumeur de son emplacement de sorte à ouvrir le canal de combustion.

Plus précisément, le canal de combustion est ouvert vers l'extérieur. Ainsi, une fuite des gaz internes au propulseur est générée par le canal de combustion, ce qui entraine une réduction de la pression interne afin d'arrêter la combustion avec précision, sans nécessiter la création d'un canal d'évacuation dans le propergol.

Le système d'éjection est donc un système d'extinction commandée du propulseur par éjection de l'allumeur.

L'allumeur étant séparé de la chambre de combustion, la combustion ne peut pas être à nouveau initialisée, et l'arrêt de la combustion est maitrisée, ce qui permet de s'affranchir de la queue de poussée du propulseur, et donc de procéder à la séparation du propulseur sans perturbation.

Selon d'autres caractéristiques de l'invention, le propulseur comporte l'une ou plusieurs des caractéristiques optionnelles suivantes considérées seules ou selon toutes les combinaisons possibles.

Selon une caractéristique, le système de découpe pyrotechnique comporte au moins un cordeau pyrotechnique disposé au niveau de l'allumeur, soit au niveau d'une plaque de l'allumeur disposée au contact de l'extrémité avant du propulseur, soit dans une paroi latérale de l'allumeur.

Selon une caractéristique, la jupe est perméable. Ainsi, les gaz internes au propulseur s'échappent de la jupe lors de l'éjection de l'allumeur, sans entraîner une explosion de la jupe.

En variante, le système de découpe pyrotechnique comporte au moins un cordeau pyrotechnique disposé au niveau de la jupe du propulseur.

Selon une autre caractéristique, le système d'éjection comporte une cheminée dans la jupe du propulseur, reliant le canal de combustion au milieu extérieur.

Ainsi, l'allumeur est guidé par la cheminée lors de son éjection.

Selon une caractéristique, la cheminée est orientée de sorte que l'allumeur éjecté ne percute pas le reste du lanceur.

La cheminée comporte avantageusement des matériaux réfractaires ou ablatifs à l'instar de ceux utilisés pour des capsules de rentrée atmosphérique (Carbon phénolique, silice imprégnée de résine phénolique, liège ...) permettant de conserver son intégrité physique pendant l'éjection des gaz.

Dans un mode de réalisation, le système d'éjection de l'allumeur comporte un dispositif de retenue de l'allumeur.

Par dispositif de retenue on entend un dispositif adapté pour maintenir l'allumeur attaché au propulseur. Ainsi, l'allumeur n'est pas éjecté hors du propulseur et n'aura pas tendance à entrer en collision avec le reste du lanceur.

Selon ce mode de réalisation, le dispositif de retenue est un panier de piégeage de l'allumeur.

Le panier de piégeage est avantageusement disposé dans la jupe du propulseur.

En variante, le dispositif de retenue est un câble ou une charnière.

Le panier de piégeage comporte avantageusement des matériaux déformables absorbeurs d'énergie tels que des structures en nida métallique.

Un autre inconvénient des propulseurs solides pour lanceur, adaptés pour être séparés dudit lanceur, est qu'une poussée résiduelle subsiste lors de leur séparation, ce qui perturbe la cinématique de la séparation et entraine un risque de collision avec le reste du lanceur.

Or, la séparation d'un propulseur ne doit avoir lieu que si l'accélération du propulseur séparé est inférieure à celle du reste du lanceur après séparation. Sinon il y a risque de rattrapage, de collision et d'endommagement du reste du lanceur.

La poussée résiduelle est donc à éviter.

Une solution connue est de disposer un ou plusieurs propulseurs d'appoint sur le propulseur à séparer, adaptés pour entraîner le propulseur à séparer dans une direction opposée au reste du lanceur.

Un inconvénient de cette solution est l'ajout d'une masse additionnelle au lanceur et une complexité de réalisation.

La présente invention a ainsi notamment pour but de maîtriser la séparation du propulseur de manière simplifiée et fiable, et de réduire la masse du lanceur.

On atteint ce but de l'invention avec une orientation de la cheminée, de sorte à générer une poussée de sens contraire à celle générée par la tuyère arrière lors de l'éjection des gaz au cours de l'extinction du propulseur, ceux-ci étant orientés dans une direction permettant d'obtenir une force de recul par rapport au reste du lanceur.

L'ouverture du canal de combustion après éjection de l'allumeur permet d'ouvrir une section à l'avant du propulseur par laquelle les gaz sont éjectés en générant une poussée garantissant une force de recul du propulseur.

Ainsi, l'accélération relative entre le propulseur séparé et le reste du lanceur est plus faible, la séparation du propulseur est orientée et tout risque de collision est évité.

En outre, le propulseur selon l'invention peut comporter d'autres éléments connus, tels que des moyens d'orientation de poussée.

L'invention concerne également un procédé de contrôle d'arrêt de poussée d'un lanceur comportant un propulseur tel que défini précédemment, le procédé comportant une étape de commande de l'éjection de l'allumeur par découpe pyrotechnique.

L'invention concerne également un lanceur comportant un propulseur tel que défini précédemment.

Selon une caractéristique, le propulseur comporte un système d'éjection comportant une cheminée dans la jupe du propulseur, reliant le canal de combustion au milieu extérieur, la cheminée du propulseur étant orientée de sorte que l'allumeur éjecté ne percute pas le reste du lanceur.

D'autres caractéristiques et avantages de la présente invention apparaîtront à la lecture de la description qui va suivre et à l'examen des figures annexées dans lesquelles :
[Fig. 1A] est une vue schématique d'un lanceur comportant un propulseur en ligne,
[Fig. 1B] est une vue schématique d'un lanceur comportant plusieurs propulseurs en ligne,
[Fig. 1C] est une photographie d'un lanceur comportant plusieurs propulseurs d'appoint,
[Fig. 2] est une vue schématique en coupe d'un propulseur solide selon un premier mode de réalisation de l'invention,
[Fig. 3A]
[Fig.3B]

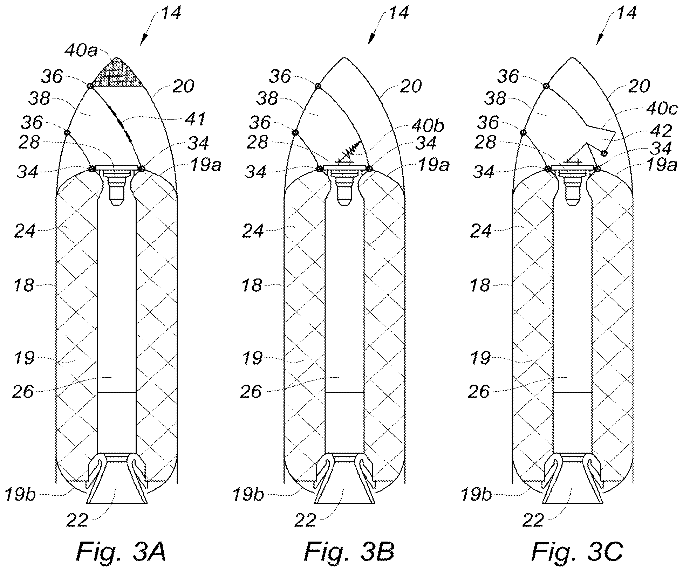

[Fig. 3C] sont des vues schématiques en coupe de propulseurs solides selon d'autres modes de réalisation de l'invention.

Dans la description qui va suivre et dans les revendications, des composants identiques, similaires ou analogues seront désignés par les mêmes chiffres de référence et on emploiera les termes « avant », « arrière », « horizontal », « vertical », « supérieur », « inférieur », etc. à titre non limitatif et en référence aux dessins, par rapport au sens de déplacement du lanceur, afin de faciliter la description.

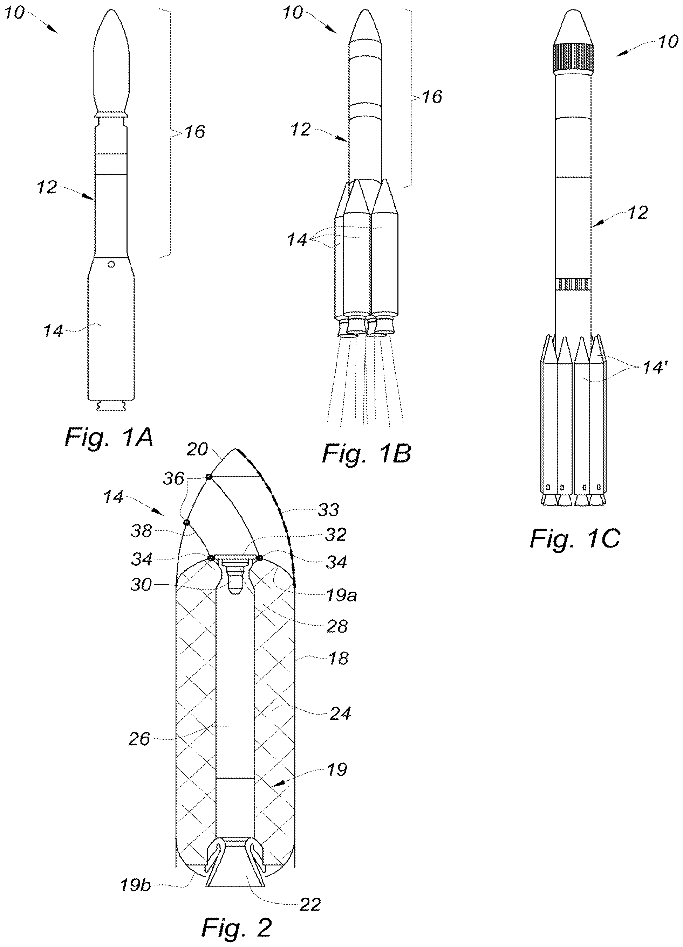

La figure 1A représente un lanceur 10 comportant un corps central 12 comportant un propulseur en ligne 14 solide.

En variante, la figure 1B représente un lanceur 10 comportant un corps central 12 comportant plusieurs propulseurs en ligne 14 solides.

Les propulseurs en ligne 14 des figures 1A et 1B sont intégrés au corps central 12 du lanceur 10. Ils sont adaptés pour être séparé du reste du lanceur 16 grâce à des moyens de séparation non visibles sur les figures 1A et 1B, tel qu'il sera décrit au regard de la figure 2.

La figure 1C représente un lanceur 10 comportant un corps central 12 et plusieurs propulseurs d'appoint 14'.

Les propulseurs d'appoint 14' de la figure 1C sont juxtaposés au corps central 12 du lanceur 10. Ils sont adaptés pour être séparé du corps central 12.

Dans la suite de la description, on parlera du reste du lanceur 16 pour désigner soit la partie du corps central 12 de laquelle est séparée un propulseur en ligne 14, soit le corps central 12 dans le cas d'un propulseur d'appoint 14'.

En outre, dans la suite de la description, un propulseur 14 pourra être un propulseur en ligne ou un propulseur d'appoint.

Dans une variante non représentée, le lanceur 10 comporte en outre au moins un propulseur liquide.

La figure 2 représente un propulseur 14 solide selon un premier mode de réalisation de l'invention, ledit propulseur comportant une paroi 18 sensiblement cylindrique, ladite paroi 18 définissant une chambre de combustion 19 comportant une extrémité dite avant 19a et une extrémité opposée dite arrière 19b.

Le propulseur 14 comporte en outre une jupe 20 conique disposée sur l'extrémité avant 19a de ladite chambre de combustion 19, et une tuyère 22 disposée à l'extrémité arrière 19b de ladite chambre de combustion 19.

La jupe 20 permet la liaison mécanique du propulseur 14 au reste du lanceur 16 (figures 1A à 1C).

Le propulseur 14 présente un canal 26 de combustion traversant la chambre de combustion 19, depuis l'extrémité avant 19a vers l'extrémité arrière 19b de la chambre de combustion 19.

Le canal 26 de combustion est traversant entre la jupe 20 et la tuyère 22.

Le propulseur 14 comporte du propergol 24 à l'intérieur de la chambre de combustion 19, autour du canal 26 de combustion.

Le canal 26 de combustion est obturé par un allumeur 28 au niveau de l'extrémité avant 19a de la chambre de combustion 19.

De manière connue, l'allumeur 28 permet de générer des gaz afin d'augmenter la pression dans la chambre de combustion 19, jusqu'à initier la combustion du propergol 24. La combustion génère à son tour des gaz, ce qui entretien la pression qui permet la suite de la combustion.

La jupe 20 recouvre l'allumeur 28.

L'allumeur 28 présente une partie longiligne 30 disposée dans le canal 26 de combustion, et une plaque 32 disposée dans la jupe 20.

La plaque 32 de l'allumeur 28 repose sur l'extrémité avant 19a de la chambre de combustion 19.

Le propulseur 14 comporte un système de séparation 33 du propulseur 14 au reste du lanceur 16 (figures 1A à 1C).

Le système de séparation 33 est par exemple un ensemble de boulons explosifs qui maintient ensemble de manière déverrouillable le propulseur 14 au reste du lanceur, et de cordeaux de découpe disposés à l'interface entre le propulseur 14 et le reste du lanceur.

Le système de séparation 33 est disposé à l'interface entre la jupe 20 et le reste du lanceur 16.

Le fonctionnement de la séparation du propulseur 14 du reste du lanceur sera décrit par la suite.

Le propulseur 14 selon l'invention comporte un système d'éjection de l'allumeur 28 comprenant un premier système de découpe pyrotechnique 34 disposé au niveau de l'allumeur 28, un deuxième système de découpe pyrotechnique 36 disposé au niveau de la jupe 20, et une cheminée 38 dans la jupe 20 permettant de guider l'allumeur 28 lors de son éjection hors du propulseur.

Le système d'éjection de l'allumeur 28 est adapté pour déloger l'allumeur 28 du canal 26 de combustion de sorte à ouvrir ledit canal 26 de combustion, au niveau de l'extrémité avant 19a de la chambre de combustion 19.

En outre, les gaz générés lors de la combustion du propergol 24 sont destinés à être éjectés de la chambre de combustion 19 par cette cheminée 38.

La cheminée 38 est orientée de sorte que l'allumeur 28 éjecté ne percute pas le reste du lanceur 16 (figures 1A à 1C).

En outre, la cheminée 38 est orientée de sorte à générer une poussée de sens contraire à celle générée par la tuyère 22 lors de l'éjection des gaz.

La cheminée 38 est orientée de sorte que les gaz éjectés par ladite cheminée génèrent une force de recul par rapport au reste du lanceur 16 (figures 1A à 1C).

Ainsi, le système d'éjection de l'allumeur 28 est un système d'extinction et de séparation du propulseur.

La cheminée 38 est réalisée dans des matériaux réfractaires ou ablatifs permettant de conserver son intégrité physique pendant l'éjection des gaz. Ces matériaux sont par exemple du carbone phénolique ou de la silice imprégnée de résine phénolique.

Le fonctionnement du système d'éjection de l'allumeur sera décrit par la suite.

Les figures 3A à 3C représentent des propulseurs 14 solides selon d'autres modes de réalisation de l'invention, lesdits propulseur étant sensiblement identiques au propulseur 14 tel que décrit au regard de la figure 2, excepté en ce qui concerne le système d'éjection de l'allumeur 28.

Dans ces modes de réalisation, le système d'éjection de l'allumeur 28 comprend, outre le premier système de découpe pyrotechnique 34 disposé au niveau de l'allumeur 28, le deuxième système de découpe pyrotechnique 36 disposé au niveau de la jupe 20, et la cheminée 38 permettant de guider les gaz générés lors de la combustion du propergol 24 hors de la chambre de combustion 19 après éjection de l'allumeur 28, un dispositif de retenue 40a, 40b, 40c de l'allumeur 28.

Selon le mode de réalisation de la figure 3A, le dispositif de retenue 40a est un panier de piégeage de l'allumeur 28.

Le panier de piégeage 40a est disposé dans la jupe 20 du propulseur 14.

Il comporte des matériaux déformables absorbeurs d'énergie tels que des structures en nida métallique.

Selon ce mode de réalisation, le système d'éjection de l'allumeur 28 comporte en outre un système de découpe pyrotechnique 41 disposé au niveau de la paroi de la cheminée 28, à l'aplomb du canal 36 de combustion.

Ce système de découpe pyrotechnique 41 permet d'ouvrir la paroi de la cheminée 36 pour créer un chemin de passage pour l'allumeur lors de son éjection en direction du panier de piégeage 40a.

Selon le mode de réalisation de la figure 3B, le dispositif de retenue 40b est un ressort qui relie l'allumeur 28 à la paroi de la cheminée 38.

Dans une variante non représentée, le dispositif de retenue est un câble qui relie l'allumeur 28 à la paroi de la cheminée 38

Selon le mode de réalisation de la figure 3C, le dispositif de retenue 40c est une charnière qui relie l'allumeur 28 à la paroi de la cheminée 38, ladite paroi comportant une cavité 42 dans laquelle l'allumeur 28 est destiné à être logé.

L'éjection de l'allumeur 28 permet de créer une dépressurisation instantanée du canal 26 de combustion, et donc entraine de façon commandée l'arrêt de la propulsion.

En outre, dans le cas d'un lanceur avec plusieurs propulseurs d'appoint, l'extinction commandée de chaque propulseur permet de garantir une symétrie de l'arrêt de combustion.

On décrit maintenant le fonctionnement de la séparation du propulseur 14 du reste du lanceur 16 et du système d'éjection de l'allumeur.

Lors de la séparation du propulseur 14 du reste du lanceur 16, le système de séparation 33 du propulseur 14 et le système d'éjection de l'allumeur sont actionnés sensiblement simultanément.

Ainsi, l'allumeur est délogé du canal 26, les gaz générés lors de la combustion du propergol 24 sont alors éjectés de la chambre de combustion par la cheminée 38, une poussée de sens contraire à celle générée par la tuyère est générée, et le propulseur 14 est séparé du reste du lanceur 16 sans percuter le reste du lanceur.

## Revendications

1. Propulseur (14, 14') solide pour un lanceur (10), le propulseur étant adapté pour être séparé du reste du lanceur (16), et comportant :
- une paroi (18) définissant une chambre de combustion (19) comportant une extrémité dite avant (19a) et une extrémité opposée dite arrière (19b),
- du propergol (24) disposé dans la chambre de combustion,
- un canal (26) de combustion traversant la chambre de combustion depuis l'extrémité avant vers l'extrémité arrière,
- une tuyère (22) disposée à l'extrémité arrière de la chambre de combustion,
- un allumeur (28) obturant le canal de combustion au niveau de l'extrémité avant de la chambre de combustion,
- une jupe (20) recouvrant l'allumeur à l'extrémité avant de la chambre de combustion, ladite jupe permettant la liaison mécanique avec le reste du lanceur (16),
**caractérisé en ce qu'**il comporte un système d'éjection (34, 36, 38) de l'allumeur comportant un système de découpe pyrotechnique configuré pour permettre d'ouvrir le canal (26) de combustion.

2. Propulseur selon la revendication précédente, dans lequel le système de découpe pyrotechnique comporte au moins un cordeau pyrotechnique (34) disposé au niveau de l'allumeur, soit au niveau d'une plaque de l'allumeur disposée au contact de l'extrémité avant du propulseur, soit dans une paroi latérale de l'allumeur.

3. Propulseur selon l'une quelconque des revendications précédentes, dans lequel la jupe est perméable.

4. Propulseur selon l'une quelconque des revendications précédentes, dans lequel le système de découpe pyrotechnique comporte au moins un cordeau pyrotechnique disposé au niveau de la jupe du propulseur.

5. Propulseur selon l'une quelconque des revendications précédentes, dans lequel le système d'éjection comporte une cheminée (38) dans la jupe du propulseur, reliant le canal de combustion au milieu extérieur.

6. Propulseur selon la revendication précédente, dans lequel la cheminée est orientée de sorte que l'allumeur éjecté ne percute pas le lanceur.

7. Propulseur selon l'une quelconque des revendications précédentes, dans lequel le système d'éjection de l'allumeur comporte un dispositif de retenue (40a, 40b, 40c) de l'allumeur.

8. Propulseur selon la revendication précédente, dans lequel le dispositif de retenue est un panier (40a) de piégeage de l'allumeur.

9. Propulseur selon la revendication précédente, dans lequel le panier de piégeage est disposé dans la jupe du propulseur.

10. Propulseurselon la revendication 7, dans lequel le dispositif de retenue est un câble ou une charnière (40c).

11. Propulseur selon l'une quelconque des revendications 5 à 10, en combinaison avec la revendication 3, dans lequel la cheminée est orientée de sorte à générer une poussée de sens contraire à celle générée par la tuyère arrière lors de l'éjection des gaz au cours de l'extinction du propulseur, ceux-ci étant orientés dans une direction permettant d'obtenir une force de recul par rapport au lanceur.

12. Procédé de contrôle d'arrêt de poussée d'un lanceur comportant un propulseur selon l'une quelconque des revendications précédentes, le procédé comportant une étape de commande de l'éjection de l'allumeur par découpe pyrotechnique.

13. Lanceur comportant un propulseur selon l'une quelconque des revendications 1 à 11.

14. Lanceur selon la revendication précédente, dans lequel le propulseur comporte un système d'éjection comportant une cheminée (38) dans la jupe du propulseur, reliant le canal de combustion au milieu extérieur, la cheminée du propulseur étant orientée de sorte que l'allumeur éjecté ne percute pas le reste du lanceur.

## Patentansprüche

1. Feststoff-Booster (14, 14') für eine Trägerrakete (10), wobei der Booster dazu ausgelegt ist, vom Rest der Trägerrakete (16) getrennt zu werden, und Folgendes umfasst:
- eine Wand (18), die eine Brennkammer (19) begrenzt, die ein sogenanntes vorderes Ende (19a) und ein gegenüberliegendes sogenanntes hinteres Ende (19b) umfasst,
- Treibstoff (24), der sich in der Brennkammer befindet,
- einen Verbrennungskanal (26), der durch die Brennkammer vom vorderen Ende zum hinteren Ende verläuft,
- eine Düse (22), die sich am hinteren Ende der Brennkammer befindet,
- eine Zündvorrichtung (28), die den Verbrennungskanal auf Höhe des vorderen Endes der Verbrennungskammer verschließt,
- eine Ummantelung (20), die die Zündvorrichtung am vorderen Ende der Verbrennungskammer abdeckt, wobei die Ummantelung eine mechanische Verbindung mit dem Rest der Trägerrakete (16) ermöglicht,
**dadurch gekennzeichnet, dass** er ein Ausstoßsystem (34, 36, 38) der Zündvorrichtung umfasst, das ein pyrotechnisches Schneidsystem umfasst, das dazu konfiguriert ist, das Öffnen des Verbrennungskanals (26) zu ermöglichen.

2. Booster nach dem vorhergehenden Anspruch, wobei das pyrotechnische Schneidsystem mindestens eine pyrotechnische Schnur (34) umfasst, die sich auf Höhe der Zündvorrichtung, entweder auf Höhe einer Platte der Zündvorrichtung, die sich in Kontakt mit dem vorderen Ende des Boosters befindet, oder in einer Seitenwand der Zündvorrichtung befindet.

3. Booster nach einem der vorhergehenden Ansprüche, wobei die Ummantelung durchlässig ist.

4. Booster nach einem der vorhergehenden Ansprüche, wobei das pyrotechnische Schneidsystem mindestens eine pyrotechnische Schnur umfasst, die sich auf Höhe der Ummantelung des Boosters befindet.

5. Booster nach einem der vorhergehenden Ansprüche, wobei das Ausstoßsystem einen Schacht (38) in der Ummantelung des Boosters umfasst, der den Verbrennungskanal mit der Außenumgebung verbindet.

6. Booster nach einem der vorhergehenden Ansprüche, wobei der Schacht so ausgerichtet ist, dass die ausgeworfene Zündvorrichtung nicht auf die Trägerrakete trifft.

7. Booster nach einem der vorhergehenden Ansprüche, wobei das Ausstoßsystem der Zündvorrichtung eine Haltevorrichtung (40a, 40b, 40c) der Zündvorrichtung umfasst.

8. Booster nach dem vorhergehenden Anspruch, wobei die Haltevorrichtung ein Auffangkorb (40a) für die Zündvorrichtung ist.

9. Booster nach dem vorhergehenden Anspruch, wobei sich der Auffangkorb in der Ummantelung des Boosters befindet.

10. Booster nach Anspruch 7, wobei die Haltevorrichtung ein Kabel oder ein Scharnier (40c) ist.

11. Booster nach einem der Ansprüche 5 bis 10 in Kombination mit Anspruch 3, wobei der Schacht so ausgerichtet ist, dass er beim Ausstoß der Gase während des Löschens des Boosters einen Schub in entgegengesetzter Richtung zu dem erzeugt, der von der hinteren Düse erzeugt wird, wobei diese in eine Richtung ausgerichtet sind, die es ermöglicht, eine Rückstoßkraft in Bezug auf die Trägerrakete zu erzielen.

12. Verfahren zum Kontrollieren eines Schubabbruchs einer Trägerrakete, die einen Booster nach einem der vorhergehenden Ansprüche umfasst, wobei das Verfahren einen Schritt des Steuerns des Ausstoßes der Zündvorrichtung durch pyrotechnisches Schneiden umfasst.

13. Trägerrakete, die einen Booster nach einem der Ansprüche 1 bis 11 umfasst.

14. Trägerrakete nach dem vorhergehenden Anspruch, wobei der Booster ein Ausstoßsystem umfasst, das einen Schacht (38) in der Ummantelung des Boosters umfasst, der den Verbrennungskanal mit der Außenumgebung verbindet, wobei der Schacht des Boosters so ausgerichtet ist, dass die ausgeworfene Zündvorrichtung nicht auf den Rest der Trägerrakete trifft.

## Claims

1. A solid propulsion unit (14, 14') for a launcher (10), the propulsion unit being adapted to be separated from the rest of the launcher (16), and including:
- a wall (18) defining a combustion chamber (19) including a so-called front end (19a) and an opposite so-called rear end (19b),
- propellant (24) placed in the combustion chamber,
- a combustion channel (26) passing through the combustion chamber from the front end to the rear end,
- a nozzle (22) arranged at the rear end of the combustion chamber,
- an igniter (28) closing the combustion channel at the front end of the combustion chamber,
- a skirt (20) covering the igniter at the front end of the combustion chamber, said skirt allowing the mechanical connection with the rest of the launcher (16),
**characterized in that** it includes an ejection system (34, 36, 38) of the igniter including a pyrotechnic cutting system configured to allow the combustion channel (26) to be opened.

2. The propulsion unit according to the preceding claim, wherein the pyrotechnic cutting system includes at least one pyrotechnic cord (34) disposed at the level of the igniter, namely at the level of a plate of the igniter placed in contact with the front end of the propulsion unit, or in a lateral wall of the igniter.

3. The propulsion unit according to any one of the preceding claims, wherein the skirt is permeable.

4. The propulsion unit according to any one of the preceding claims, wherein the pyrotechnic cutting system includes at least one pyrotechnic cord disposed at the level of the skirt of the propulsion unit.

5. The propulsion unit according to any one of the preceding claims, wherein the ejection system includes a chimney (38) in the skirt of the propulsion unit, connecting the combustion channel to the external environment.

6. The propulsion unit according to the preceding claim, wherein the chimney is oriented so that the ejected igniter does not strike the launcher.

7. The propulsion unit according to any one of the preceding claims, wherein the igniter ejection system includes a retaining device (40a, 40b, 40c) of the igniter.

8. The propulsion unit according to the preceding claim, wherein the retaining device is a basket (40a) for trapping the igniter.

9. The propulsion unit according to the preceding claim, wherein the trapping basket is arranged in the skirt of the propulsion unit.

10. The propulsion unit according to claim 7, wherein the retaining device is a cable or a hinge (40c).

11. The propulsion unit according to any one of claims 5 to 10, in combination with claim 3, wherein the chimney is oriented so as to generate a thrust in the opposite direction to that generated by the rear nozzle during the ejection of the gases during the extinction of the propulsion unit, these being oriented in a direction allowing a recoil force to be obtained relative to the launcher.

12. A method for controlling the thrust stop of a launcher including a propulsion unit according to any one of the preceding claims, the method including a step of controlling the ejection of the igniter by pyrotechnic cutting.

13. A launcher including a propulsion unit according to any one of claims 1 to 11.

14. The launcher according to the preceding claim, wherein the propulsion unit includes an ejection system including a chimney (38) in the skirt of the propulsion unit, connecting the combustion channel to the external environment, the chimney of the propulsion unit being oriented so that the ejected igniter does not impact the rest of the launcher.
